# EUROPÄISCHE PATENTSCHRIFT

(11) **EP 4 009 843 B1**
(45) Veröffentlichungstag und Bekanntmachung des Hinweises auf die Patenterteilung: **31.05.2023**
(21) Anmeldenummer: 20746190.6
(22) Anmeldetag: 24.07.2020
(51) Int. Cl.: A47L 9/00, A47L 9/24, A47L 7/00, A47L 9/20

(54) **VORRICHTUNG ZUR KOMPENSATION VON DRUCKSCHWANKUNGEN**
DEVICE FOR COMPENSATING FOR PRESSURE VARIATIONS
DISPOSITIF DE COMPENSATION DES VARIATIONS DE PRESSION

(30) Priorität: 05.08.2019 EP 19189940
(43) Veröffentlichungstag der Anmeldung: 15.06.2022
(73) Patentinhaber: Hilti Aktiengesellschaft, 9494 Schaan (LI)
(72) Erfinder: LAIPPLE, Benno, 86899 Landsberg am Lech (DE); BASALLA, Felix, 72224 Ebhausen (DE); TAACK-TRAKRANEN, John, Van, 81475 München (DE)
(74) Vertreter: Hilti Aktiengesellschaft Corporate Intellectual Property
(86) Internationale Anmeldenummer: PCT/EP2020/070971
(87) Internationale Veröffentlichungsnummer: WO 2021/023525

(56) Entgegenhaltungen:
- EP-A1- 2 937 031
- DE-A1-102005 017 702
- DE-A1-102010 045 979
- FR-A- 1 189 789

## Beschreibung

Die vorliegende Erfindung betrifft eine Vorrichtung für einen Staubsauger zum Kompensieren von Luftdruckschwankungen mit einem Grundkörper, durch welche eine Luftströmung in eine Strömungsrichtung strömen kann.

Des Weiteren betrifft die vorliegende Erfindung einen Staubsaugerschlauch mit wenigstens einer Vorrichtung für einen Staubsauger zum Kompensieren Luftdruckschwankungen.

Staubsauger gemäß dem Stand der Technik, welche in Verbindung mit einer stauberzeugenden Werkzeugmaschine, insbesondere Bohrhämmer, Schleifgeräte oder Sägen, verwendet werden, verfügen für gewöhnlich über ein Filterabreinigungssystem zum gelegentlichen Abreinigen des Filters im Staubsauger. Durch ein gelegentliches Abreinigen erhält sich die Funktion des Filters. Die Filterabreiningung geschieht dabei mittels einer schlagartigen, kurzzeitigen Umkehr der Druckverhältnisse vor und hinter dem Filter, die die gewöhnliche Luftströmung durch den zu reinigen Filter umkehrt. Der gegen die gewöhnliche Strömungsrichtung strömende Luftstrom bewirkt in Form eines Druckstoßes, dass der angesammelte Staub und Dreck aus dem Filter in einen Aufbewahrungsbehälter fällt, sodass der Filter anschließend wieder frei ist und damit eine verbesserte Filterwirkung aufweist. Hierdurch entsteht allerdings eine Druckschwankung im Saugsystem.

Die gelegentliche Abreinigung des Filters durch die gelegentliche schlagartige Umkehr der Druckverhältnisse vor und hinter dem Filter kann die Saugfähigkeit des Staubsaugers so beeinträchtigen, dass eine ausreichende Absaugung von Staub nicht mehr gewährleistet ist.

Beispielsweise offenbart die FR 1 189 789 A einen Unterdruckregler für einen Staubsauger, wobei der Unterdruckregler in einer Luftleitung zwischen dem Gebläse und der Saugöffnung angeordnet ist und aus zwei ineinander verschiebbaren Rohrabschnitten gebildet wird. In einem Mantel des einen Rohrabschnitts soll eine Durchtrittsöffnung angeordnet sein, die durch eine Axialverschiebung des anderen Rohrabschnitts abgedeckt werden kann. Allerdings ist der FR 1 189 789 A kein Hinweis darauf zu entnehmen, wie ein Unterdruck in dem Staubsauger so aufrecht erhalten bleibt, dass eine ausreichend gute Absaugung von Staub auch während einer Abreinigung der Filter ermöglicht werden kann.

Es ist somit Aufgabe der vorliegenden Erfindung eine Vorrichtung für einen Staubsauger sowie einen Staubsaugerschlauch mit einer Vorrichtung für einen Staubsauger bereitzustellen, welche das vorstehend genannte Problem löst und eine wenigstens ausreichende Absaugung von Staub auch während der Abreinigung eines Filters ermöglicht.

Die Aufgabe wird gelöst durch den Gegenstand in Anspruch 1 bzw. durch den Gegenstand in Anspruch 6. Vorteilhafte Ausführungsformen sind in den Unteransprüchen aufgeführt.

Die Aufgabe wird dabei gelöst durch eine Vorrichtung für einen Staubsauger zum Kompensieren von Luftdruckschwankungen mit einem Grundkörper, durch welche eine Luftströmung in eine Strömungsrichtung strömen kann.

Erfindungsgemäß enthält der Grundkörper wenigstens eine Durchgangsöffnung und ein Trennelement ist enthalten zum Trennen der Durchgangsöffnung von einer Umgebungsluft, wobei das Trennelement beweglich ist, damit ein Reservoir zum Aufnehmen eines Luftvolumens zwischen Grundkörper und Trennelement erzeugt wird und ein von der Luftströmung erzeugter Unterdruck in dem Grundkörper wenigstens teilweise erhalten bleibt.

Gemäß einer vorteilhaften Ausgestaltung der vorliegenden Erfindung kann es möglich sein, dass das Trennelement in Form einer elastischen Membran ausgestaltet ist. Hierdurch kann auf einfache Art und Weise zum einen ein Trennelement geschaffen werden, welches formgenau an einer Außenwand des Grundkörpers anliegen und zum anderen eine möglichst variable Form eines Reservoirs erzeugen kann.

Entsprechend einer weiteren vorteilhaften Ausgestaltung der vorliegenden Erfindung kann es ebenfalls möglich sein, dass das Trennelement in Form einer Kolben-Zylinder-Einheit ausgestaltet ist. Hierdurch kann ein möglichst stabiles Trennelement geschaffen werden, welches weitestgehend widerstandsfähig gegen mechanische Einflüsse (wie z.B. Stöße oder Schläge) ist und eine zuverlässige Funktionalität gewährleistet.

Gemäß einer vorteilhaften Ausgestaltung der vorliegenden Erfindung kann es möglich sein, dass das Trennelement in Form einer von dem Grundkörper abschwenkbaren Platte ausgestaltet ist. Die abschwenkbare Platte kann auch als schwenkbar oder rotierbar (im Sinne von rotationsfähig) bezeichnet werden. Hierdurch kann ebenfalls ein möglichst stabiles Trennelement geschaffen werden. Die Ausgestaltung des Trennelements in Form einer abschwenkbaren Platte muss dabei lediglich mit nur einem Scharnierelement an dem Grundkörper befestigt werden, sodass im Gegensatz zu der Ausgestaltung als Kolben-Zylinder-Einheit eine geringere Passgenauigkeit notwendig ist. Das frei schwenkbare Ende des als abschwenkbaren Platte ausgestalteten Trennelements kann mit einer Membran so an der Außenwand des Grundkörpers befestigt sein, dass eine luftdichte Abdichtung zwischen dem frei schwenkbaren Ende des Trennelements und der Außenwand des Grundkörpers entsteht. Darüber hinaus gewährleistet die Ausgestaltung als abschwenkbare Platte eine gewisse Robustheit gegen eindringenden Staub in die Vorrichtung.

Des Weiteren kann gemäß einer weiteren vorteilhaften Ausgestaltungsform der vorliegenden Erfindung es möglich sein, dass das Trennelement in Form eines Faltenbalgs ausgestaltet sein.

Entsprechend einer vorteilhaften Ausgestaltung der vorliegenden Erfindung kann es möglich sein, dass mehr als ein Grundkörper enthalten ist. Hierdurch kann der Effekt des Kompensierens von Luftdruckschwankungen variabel erhöht werden.

Die Aufgabe wird des Weiteren gelöst durch einen Staubsaugerschlauch mit wenigstens einer Vorrichtung für einen Staubsauger zum Kompensieren von Luftdruckschwankungen mit einem Grundkörper, durch welche eine Luftströmung in eine Strömungsrichtung strömen kann.

Weitere Vorteile ergeben sich aus der folgenden Figurenbeschreibung. In den Figuren sind verschiedene Ausführungsbeispiele der vorliegenden Erfindung dargestellt. Die Figuren, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

In den Figuren sind gleiche und gleichartige Komponenten mit gleichen Bezugszeichen beziffert. Es zeigen:
- Figur 1a: eine schematische Seitenansicht auf einen Staubsauger mit einem erfindungsgemäßen Staubsaugerschlauch und einer erfindungsgemäßen Vorrichtung zum Kompensieren von Luftdruckschwankungen mit dem Trennelement in einer ersten Position gemäß einer ersten Ausführungsform;
- Figur 1b: eine schematische Seitenansicht auf einen Staubsauger mit dem erfindungsgemäßen Staubsaugerschlauch und der erfindungsgemäßen Vorrichtung zum Kompensieren von Luftdruckschwankungen mit dem Trennelement in einer zweiten Position gemäß der ersten Ausführungsform;
- Figur 2: eine schematische Seitenansicht auf einen Staubsauger mit einem erfindungsgemäßen Staubsaugerschlauch mit einer erfindungsgemäßen Vorrichtung zum Kompensieren von Luftdruckschwankungen gemäß einer zweiten Ausführungsform;
- Figur 3: eine schematische Seitenansicht auf einen Staubsauger mit einem erfindungsgemäßen Staubsaugerschlauch mit einer erfindungsgemäßen Vorrichtung zum Kompensieren von Luftdruckschwankungen gemäß einer dritten Ausführungsform;
- Figur 4: eine perspektivische Ansicht auf die erfindungsgemäße Vorrichtung zum Kompensieren von Luftdruckschwankungen gemäß einer ersten Ausführungsform mit einem Trennelement in einer ersten Position;
- Figur 5: eine perspektivische Ansicht auf die erfindungsgemäße Vorrichtung zum Kompensieren von Luftdruckschwankungen gemäß der ersten Ausführungsform mit dem Trennelement in einer zweiten Position;
- Figur 6a: eine Seitenansicht auf die erfindungsgemäße Vorrichtung zum Kompensieren von Luftdruckschwankungen gemäß einer zweiten Ausführungsform mit dem Trennelement in der ersten Position; und
- Figur 6b: eine Seitenansicht auf die erfindungsgemäße Vorrichtung zum Kompensieren von Luftdruckschwankungen gemäß einer dritten Ausführungsform mit dem Trennelement in der zweiten Position.

### Ausführungsbeispiele:

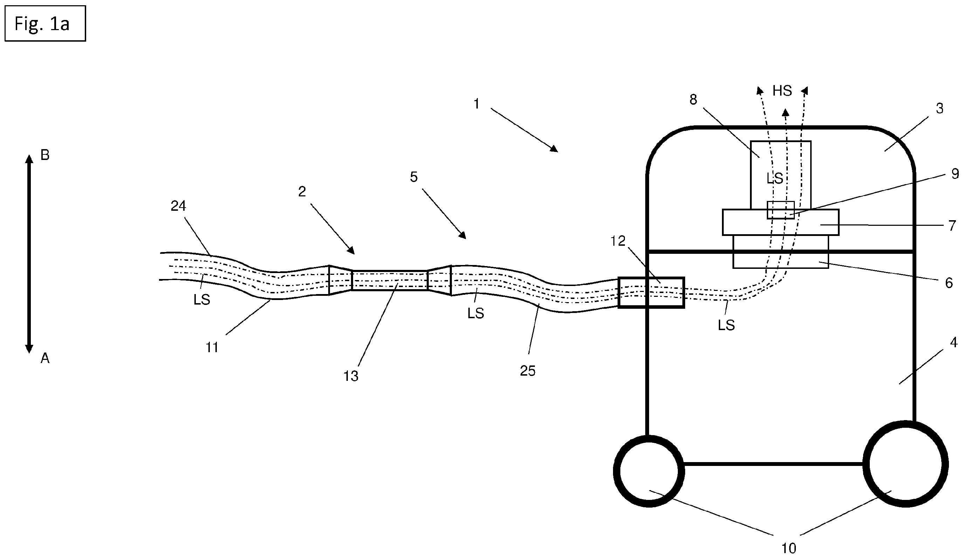

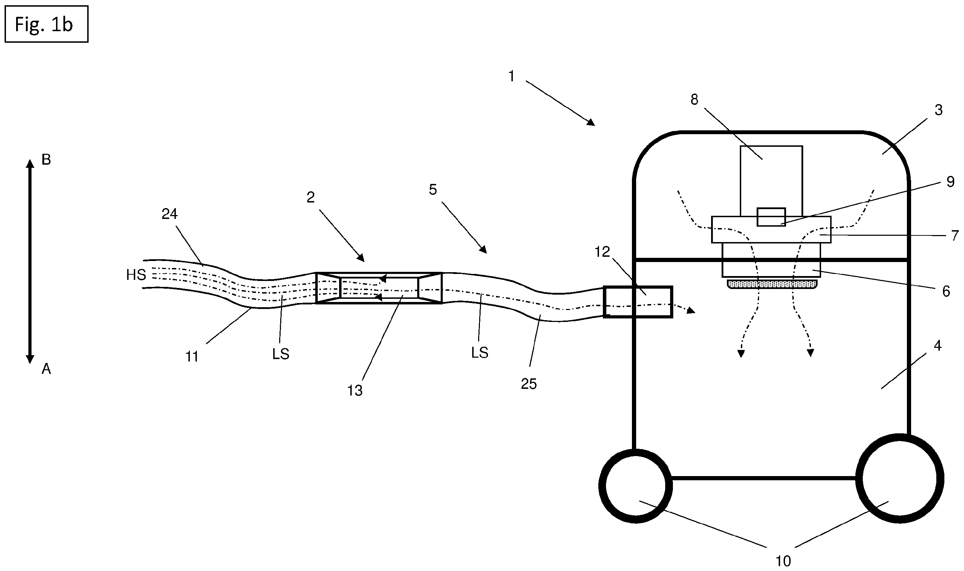

Figur 1a und 1b zeigen einen Staubsauger 1 mit einer Vorrichtung 2 zum Kompensieren von Luftdruckschwankungen gemäß einer ersten Ausführungsform.

Der Staubsauger 1 enthält dabei im Wesentlichen einen Saugkopf 3, einen Aufbewahrungsbehälter 4 sowie eine Ansaugeinrichtung 5.

Wie den Figuren 1a bis 3 zu entnehmen ist, enthält der Saugkopf 3 wiederum im Wesentlichen einen Filter 6, eine Filterabreinigungseinrichtung 7 sowie eine Turbine 8.

Die Turbine 8 dient zum Erzeugen eines Unterdrucks, durch welchen eine Luftströmung LS in das Innere des Staubsaugers 1 strömt. Mit Hilfe dieser Luftströmung LS können Staubpartikel sowie Schmutzpartikel aufgesaugt und zur Aufbewahrung in den Aufbewahrungsbehälter 4 befördert werden.

Der Filter 6 dient zum Herausfiltern von Staub- und Schmutzpartikeln aus einer vom Staubsauger 1 angesogenen Luftströmung LS und schützt damit unter anderem die Turbine 8 vor Staub und Verunreinigungen.

Die Filterabreinigungseinrichtung 7 ist ausgestaltet, um kurzzeitig und schlagartig die Druckverhältnisse in der Strömungsrichtung HS vor und hinter dem Filter 6 umzukehren. Mit anderen Worten: die Luftströmung LS in Richtung B in Richtung A umgekehrt. Ein hierdurch erzeugter Luftdruckstoß führt zu einer Abreinigung des Filters 6, wodurch der im Filter 6 angesammelte Staub und Schmutz in Richtung B und in den Aufbewahrungsbehälter 4 fällt. Der Filter 6 ist hierdurch wieder frei und funktionsfähig. Anschließend wird mit Hilfe der Filterabreinigungseinrichtung 7 die Luftströmung LS entlang der Strömungsrichtung HS wiederhergestellt. Die Funktion und insbesondere die Umstellung der Filterabreinigungseinrichtung 7 wird durch eine Steuerungseinrichtung 9 gesteuert.

Der Aufbewahrungsbehälter 4 ist im Wesentlichen als Container mit einem Aufnahmevolumen gestaltet. An der Unterseite des als Containers ausgestalteten Aufbewahrungsbehälters 4 sind für die Mobilität des Staubsaugers Räder 10 vorgesehen. In den Figuren sind lediglich zwei Räder 10 gezeigt.

Die Ansaugeinrichtung 5 enthält im Wesentlichen einen Staubsaugerschlauch 11, ein Befestigungselement 12 sowie eine Düse. Bei der Düse kann es sich beispielweise um eine Bodendüse handeln. Die Düse ist in den Figuren nicht dargestellt.

Das Befestigungselement 12 ist im Wesentlichen als zylindrisches Rohr ausgestaltet und dient als Schnittstelle bzw. Anschluss für den Staubsaugerschlauch 11 an dem Aufbewahrungsbehälter 4.

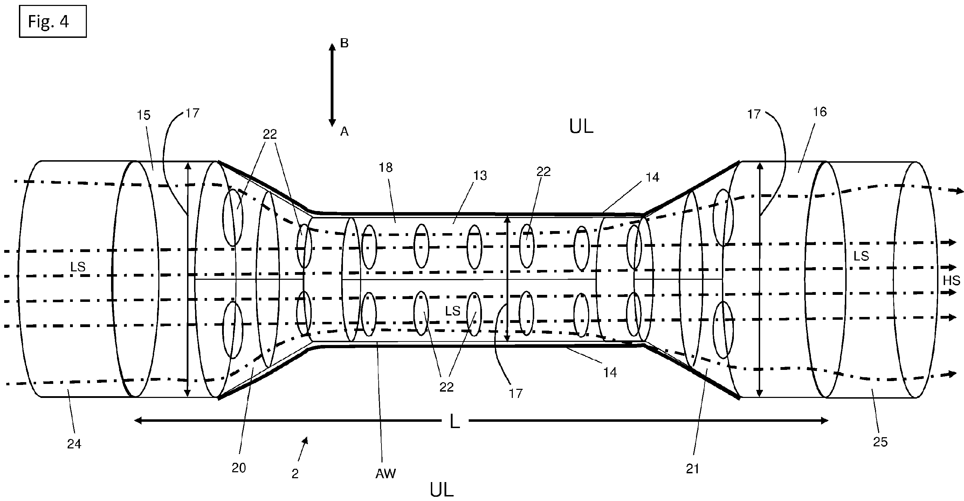

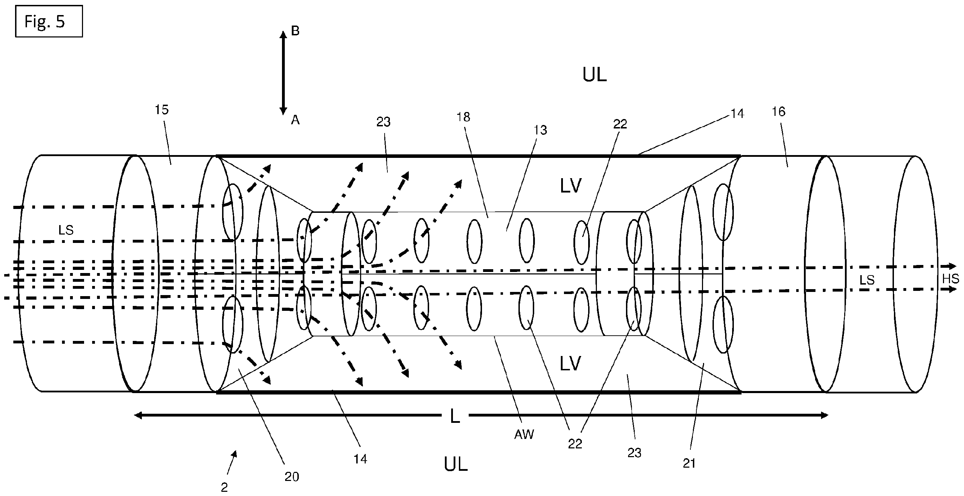

Figur 4 und 5 zeigt die Vorrichtung 2 zum Kompensieren von Luftdruckschwankungen gemäß einer ersten Ausgestaltungsform. Die Vorrichtung 2 enthält dabei im Wesentlichen einen Grundkörper 13 sowie ein Trennelement 14.

Der Grundkörper 13 ist im Wesentlichen als rohrähnlicher Zylinder mit einem taillierten Bereich TB ausgestaltet. Der Grundkörper 13 enthält damit einen ersten Bereich 15 und zweiten Bereich 16 mit einer ersten Durchströmungsquerschnittsfläche 17 sowie einen dritten Bereich 18 mit einer zweiten Durchströmungsquerschnittsfläche 19. Der dritte Bereich 18 ist zwischen dem ersten und zweiten Bereich 15, 16 positioniert. Der Übergang 20 von dem ersten Bereich 15 zu dem dritten Bereich 18 sowie der Übergang 21 von dem zweiten Bereich 16 zu dem dritten Bereich 18 ist jeweils kegelstumpfförmig ausgestaltet. Des Weiteren enthält der Grundkörper 13 über die gesamte Länge L eine Anzahl an Durchgangsöffnungen 22. Die Durchgangsöffnungen 22 können auch als Durchbohrungen bezeichnet werden. Durch die Durchgangsöffnungen 22 kann Luft von dem Inneren des Grundkörpers 13 nach außen sowie von außen in das Innere des Grundkörpers 13 strömen.

Das Trennelement 14 ist gemäß der ersten Ausgestaltungsform in Form eines Schlauches aus einer elastische Membran gestaltet, vgl. Figur 4 und 5. Das als Membran ausgestaltete Trennelement 14 umschließt dabei den Bereich des Grundkörpers 13, der die Durchgangsöffnungen 22 aufweist. Das Trennelement 14 erstreckt sich damit von dem ersten Bereich 15 zu dem zweiten Bereich 16 des Grundkörpers 13.

Gemäß einer weiteren vorteilhaften Ausgestaltungsform sind an der Außenwand AW des Grundkörpers 13 eine Vielzahl von Erhebungen in radialer Ausrichtung angeordnet. Die Erhebungen sind in den Figuren nicht gezeigt. Die Erhebungen können als Rippen ausgestaltet sein. Die Erhebungen dienen dazu, dass während des normalen Saugvorgangs das als Membran ausgestaltete Trennelement 14 tangential nur an den Erhebungen anliegt und die verbleibende Außenwand AW des Grundkörpers 13 nicht von dem Trennelement 14 bedeckt ist. Es ist dabei möglich, dass die Durchgangsöffnungen 22 lediglich an den oberen Enden der Erhebungen positioniert sind. Hierdurch wird während des normalen Saugvorgangs das als Membran ausgestaltete Trennelement 14 lediglich in den Bereichen der Erhebungen an den Grundkörper 13 herangesogen. Dies kann zu einer besseren und größeren homogenen Vorspannung des als Membran ausgestalteten Trennelements 14 an dem Grundkörper 13 während des normalen Saugvorgangs führen. Eine möglichst homogene Vorspannung des Trennelement 14 sorgt für eine bessere Saugfunktion des Staubsaugers 1.

Wie in Figur 1a dargestellt strömt bei der Verwendung des Staubsaugers 1 im Staubsaugmodus eine Luftströmung LS in einer Strömungsrichtung HS von der (nicht gezeigten) Bodendüse über den Staubsaugerschlauch 11 durch die Vorrichtung 2 zum Kompensieren von Luftdruckschwankungen, den Aufbewahrungsbehälter 4, den Filter 6, die Turbine 8 und durch (nicht gezeigte) Ausströmungsöffnungen wieder aus dem Saugkopf 3 heraus. Im Staubsaugmodus wird hierdurch Staub und Verschmutzungspartikel ausgesogen. Im Staubsaugermodus strömt die Luftströmung LS von einem zweiten Ende 16 des Grundkörpers 13 entlang dem Grundkörper 13 zu einem ersten Ende 15 des Grundkörpers 13 (vgl. Figur 4). Wenn die Luftströmung LS entlang der Strömungsrichtung HS durch die Vorrichtung strömt wird das als elastische Membran ausgestaltete Trennelement 14 von dem Unterdruck, welcher von der Luftströmung LS erzeugt wird, an die Außenwand AW des Grundkörpers 13 gesogen, sodass das Trennelement 14 eng an der Außenwand AW des Grundkörpers 13 anliegt und dabei die Durchgangsöffnungen 22 abdeckt. Das Trennelement 14 befindet sich in einer ersten Position, vgl. Figur 1a und 4. Die Luftströmung LS ist dabei nicht wesentlich beeinträchtigt und Staub wird weiterhin mit Hilfe der Luftströmung LS in den Staubsauger 1 eingesaugt.

Figur 1b zeigt den Staubsauger 1 in einem Filterabreinigungsmodus, mit dem der Filter 6 (wie vorstehend beschrieben) von dem angesogenen Staub und Schmutz befreit wird. Durch kurzzeitige Umkehr der Druckverhältnisse vor und hinter dem Filter 6 wird ein Druckstoß zum Abreinigen des Filters 6 erzeugt.

Wie bereits vorstehend beschrieben kann die Abreinigung des Filters 6 auf diese Art den Unterdruck in der Ansaugeinrichtung 5 und insbesondere im Staubsaugschlauch 11 beeinträchtigen.

Durch die spezielle Ausgestaltung der Vorrichtung 2 zum Kompensieren von Luftdruckschwankungen wird der Unterdruck in der Ansaugeinrichtung 5 und insbesondere im Staubsaugerschlauch 11 aufrecht gehalten, um einen ununterbrochenen Saugvorgang zu ermöglichen.

Das als elastische Membran ausgestaltete Trennelement 14 baut seine Vorspannung ab und bewegt sich von der Außenwand AW des Grundkörpers 13 in radialer Richtung. Das Trennelement 14 bewegt somit radial von der ersten Position (vgl. Figur 1a und 4) in die zweite Position (vgl. Figur 1b und 5). Die Bewegung des Trennelements 14 geschieht durch den Druckunterschied zwischen dem noch relativ niedrigen Luftdruck im Inneren des Grundkörpers 13 sowie dem atmosphärischen Luftdruck der Umgebungsluft UL um den Grundkörper 13. Als Folge der Bewegung des Trennelements 14 in radialer Richtung wird ein Reservoir 23 zum Aufnehmen eines Luftvolumens LV zwischen Grundkörper 13 und Trennelement 14 erzeugt. Der von der Luftströmung LS erzeugter Unterdruck in dem Grundkörper 13 bleibt somit wenigstens teilweise erhalten und der Saugvorgang wird fortgesetzt.

Wie vorstehend bereits erwähnt, zeigt Figur 1a und 1b die erste Ausführungsform des erfindungsgemäßen Staubsaugerschlauchs 11, wobei die Vorrichtung 2 zum Kompensieren von Luftdruckschwankungen zwischen einem ersten Schlauchabschnitt 24 und zweiten Schlauchabschnitt 25 positioniert ist. Die zwei Schlauchabschnitte 24, 25 sind im Wesentlichen gleichlang.

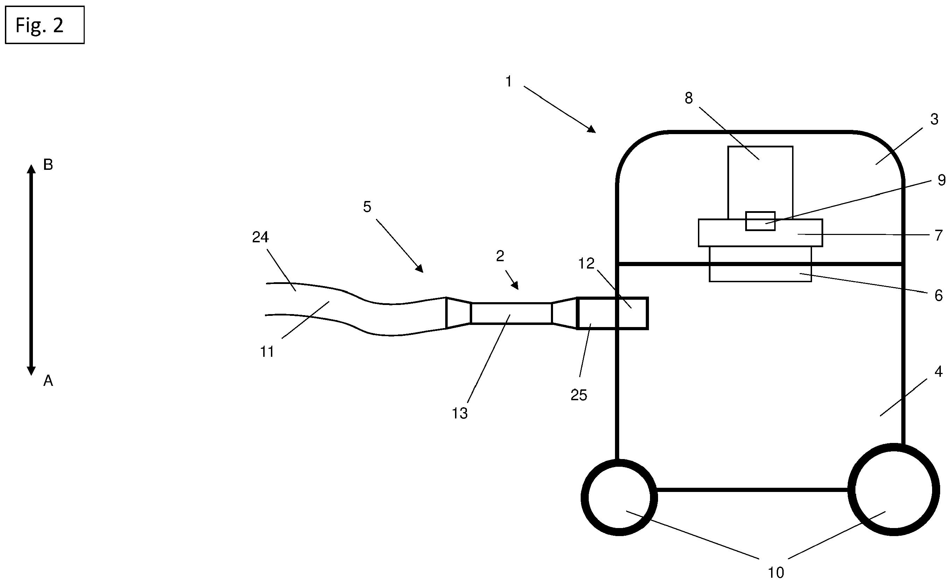

Figur 2 zeigt eine zweite Ausführungsform des erfindungsgemäßen Staubsaugerschlauchs 11, wobei die Vorrichtung zum Kompensieren von Luftdruckschwankungen zwischen einem ersten Schlauchabschnitt 24 und zweiten Schlauchabschnitt 25 positioniert ist. Der erste Schlauchabschnitt 24 ist dabei länger als der zweite Schlauchabschnitt 25.

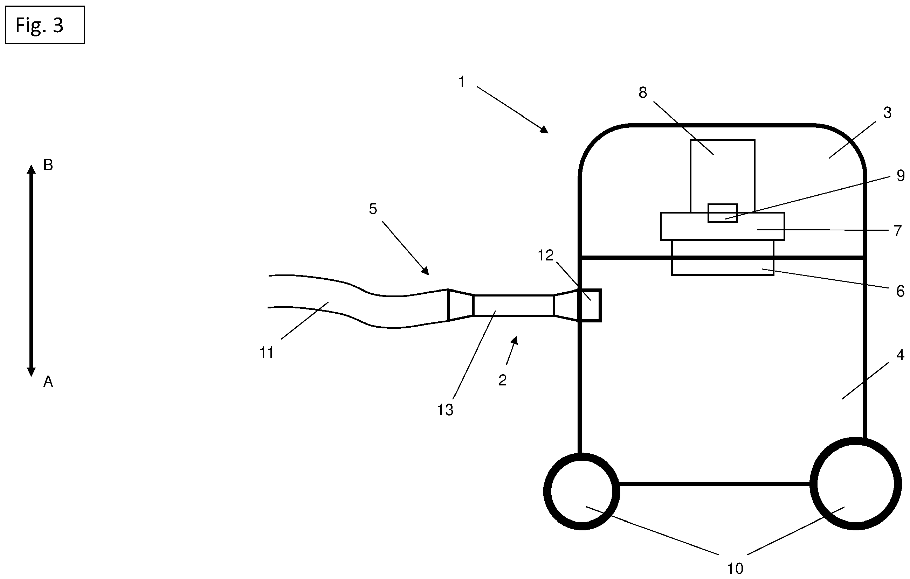

Figur 3 zeigt eine dritte Ausführungsform des erfindungsgemäßen Staubsaugerschlauchs 11, wobei die Vorrichtung 2 zum Kompensieren von Luftdruckschwankungen direkt an dem Befestigungselement 12 für den Aufbewahrungsbehälter 4 positioniert ist. Es existiert somit nur ein Schlauchabschnitt.

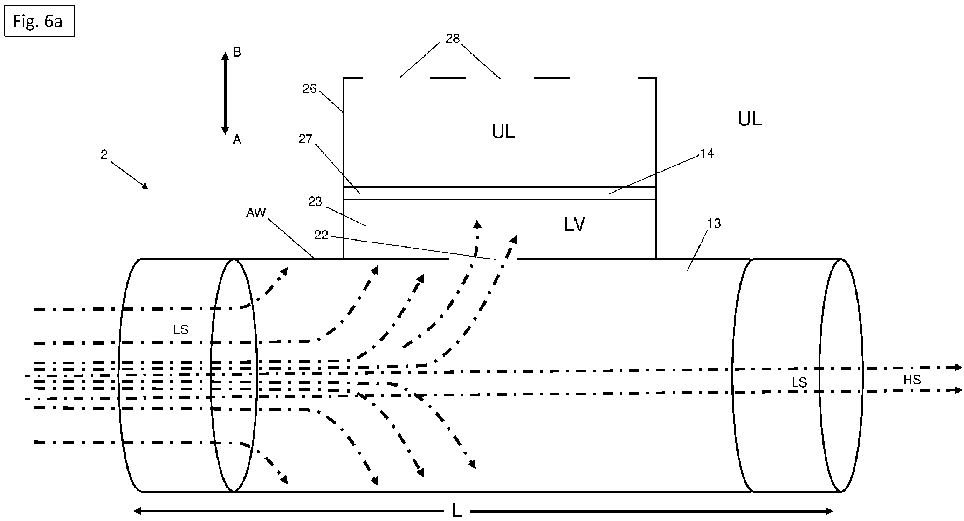

Figur 6a zeigt eine weitere Ausführungsform der Vorrichtung 2 zum Kompensieren von Luftdruckschwankungen, bei der das Trennelement 14 im Wesentlichen als Kolben-Zylinder-Einheit ausgestaltet ist. Das als Kolben-Zylinder-Einheit ausgestaltete Trennelement 14 ist durch eine Durchgangsöffnung 22 mit dem Inneren des Grundkörpers 13 so verbunden, dass ein Luftvolumen LV in Richtung B aus dem Inneren des Grundkörpers 13 in den Zylinder 26 strömen kann. Der Druckunterschied zwischen dem Luftdruck im Inneren des Grundkörpers 13 und der Umgebungsluft UL sorgt dafür, dass der Kolben 27 in Richtung B gedrückt wird. Unterhalb des Kolbens 27 in Richtung A wird in dem Zylinder 26 das Reservoir 23 zum Aufnehmen eines Luftvolumens LV zwischen Grundkörper 13 und Trennelement 14 erzeugt. An einem oberen Ende 26a des Zylinders 26 sind Öffnungen 28 vorgesehen, sodass der Bereich in Richtung B oberhalb des Kolbens 27 mit Umgebungsluft UL und einem atmosphärischen Luftdruck gefüllt ist.

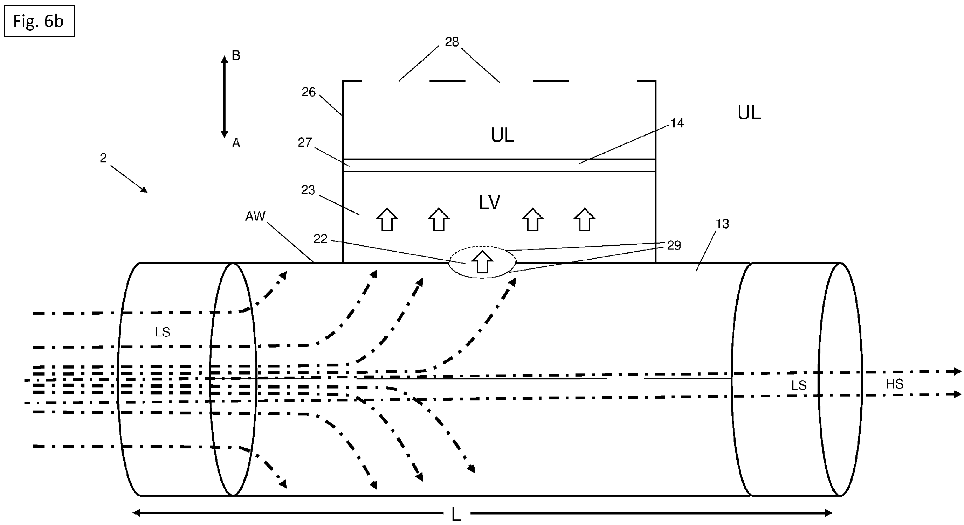

Figur 6b zeigt eine weitere Ausführungsform der Vorrichtung 2 zum Kompensieren von Luftdruckschwankungen, bei der das Trennelement 14, wie bei der Ausführungsform in Figur 6a, im Wesentlichen als Kolben-Zylinder-Einheit ausgestaltet ist. Als Unterscheid zu der Ausführungsform in Figur 6a ist bei der Ausführungsform in Figur 6b die Durchgangsöffnung 22 zwischen dem Grundkörper 13 und dem Trennelement 14 durch ein elastisches Verschlusselement 29 verschlossen.

Des Weiteren ist es gemäß einer in den Figuren nicht gezeigten Ausgestaltungsform auch möglich, dass die Vorrichtung 2 zum Kompensieren von Luftdruckschwankungen innerhalb des Aufbewahrungsbehälters 4 positioniert ist.

### Bezugszeichenliste

- 1: Staubsauger
- 2: Vorrichtung zum Kompensieren von Luftdruckschwankungen
- 3: Saugkopf
- 4: Aufbewahrungsbehälter
- 5: Ansaugeinrichtung
- 6: Filter
- 7: Filterabreinigungseinrichtung
- 8: Turbine
- 9: Steuerungseinrichtung
- 10: Räder
- 11: Staubsaugerschlauch
- 12: Befestigungselement
- 13: Grundkörper
- 14: Trennelement
- 15: erster Bereich des Grundkörpers
- 16: zweiter Bereich des Grundkörpers
- 17: erste Durchströmungsquerschnittsfläche
- 18: dritter Bereich des Grundkörpers
- 19: zweite Durchströmungsquerschnittsfläche
- 20: Übergang von dem ersten Bereich 15 zu dem dritten Bereich 18
- 21: Übergang von dem zweiten Bereich 16 zu dem dritten Bereich 18
- 22: Durchgangsöffnung
- 23: Reservoir
- 24: erster Schlauchabschnitt
- 25: zweiter Schlauchabschnitt
- 26: Zylinder
- 27: Kolben
- 28: Öffnungen
- 29: Verschlusselement
- AW: Außenwand des Grundkörpers
- L: Länge des Grundkörpers
- LS: Luftströmung
- HS: Strömungsrichtung
- LV: Luftvolumen
- UL: Umgebungsluft

## Patentansprüche

1. Vorrichtung (2) für einen Staubsauger (1) zum Kompensieren von Luftdruckschwankungen mit einem Grundkörper (13), durch welche eine Luftströmung (LS) in eine Strömungsrichtung (HS) strömen kann,
**dadurch gekennzeichnet, dass** der Grundkörper (13) wenigstens eine Durchgangsöffnung (22) enthält und dass ein Trennelement (14) zum Trennen der Durchgangsöffnung (22) von einer Umgebungsluft (UL) enthalten ist, wobei das Trennelement (14) beweglich ist, damit ein Reservoir (23) zum Aufnehmen eines Luftvolumens (LV) zwischen Grundkörper (13) und Trennelement (14) erzeugt wird und ein von der Luftströmung (LS) erzeugter Unterdruck in dem Grundkörper (13) wenigstens teilweise erhalten bleibt.

2. Vorrichtung (2) nach Anspruch 1,
**dadurch gekennzeichnet, dass** das Trennelement (14) in Form einer elastischen Membran ausgestaltet ist.

3. Vorrichtung (2) nach Anspruch 1,
**dadurch gekennzeichnet, dass** das Trennelement (14) in Form einer Kolben-Zylinder-Einheit ausgestaltet ist.

4. Vorrichtung (2) nach Anspruch 1,
**dadurch gekennzeichnet, dass** das Trennelement (14) in Form einer von dem Grundkörper (13) abschwenkbaren Platte ausgestaltet ist.

5. Vorrichtung (2) nach wenigstens einem der Ansprüche 1 bis 4,
**dadurch gekennzeichnet, dass** mehr als ein Grundkörper (13) enthalten ist.

6. Staubsaugerschlauch (11) mit wenigstens einer Vorrichtung (2) nach wenigstens einem der Ansprüche 1 bis 5.

## Claims

1. Apparatus (2) for a vacuum cleaner (1) for compensating air pressure fluctuations, having a main body (13) through which an air flow (LS) can flow in a flow direction (HS),
**characterized in that** the main body (13) contains at least one passage opening (22), and **in that** a separating element (14) for separating the passage opening (22) from ambient air (UL) is included, wherein the separating element (14) is movable to ensure that a reservoir (23) to receive an air volume (LV) is produced between the main body (13) and the separating element (14), and a vacuum produced in the main body (13) by the air flow (LS) is at least partially maintained.

2. Apparatus (2) according to Claim 1,
**characterized in that** the separating element (14) is configured in the form of a flexible diaphragm.

3. Apparatus (2) according to Claim 1,
**characterized in that** the separating element (14) is configured in the form of a piston-cylinder unit.

4. Apparatus (2) according to Claim 1,
**characterized in that** the separating element (14) is configured in the form of a plate that can be pivoted away from the main body (13).

5. Apparatus (2) according to at least one of Claims 1 to 4,
**characterized in that** more than one main body (13) is included.

6. Vacuum cleaner hose (11) having at least one apparatus (2) according to at least one of Claims 1 to 5.

## Revendications

1. Dispositif (2) destiné à un aspirateur (1) pour compenser les fluctuations de pression d'air, ledit dispositif comprenant un corps de base (13) qu'un écoulement d'air (LS) peut traverser dans un sens d'écoulement (HS),
**caractérisé en ce que** le corps de base (13) contient au moins une ouverture de passage (22) et **en ce qu'**un élément de séparation (14) est prévu pour séparer l'ouverture de passage (22) de l'air ambiant (UL), l'élément de séparation (14) étant mobile de sorte qu'un réservoir (23) destiné à recevoir un volume d'air (LV) soit généré entre le corps de base (13) et l'élément de séparation (14) et qu'une pression négative générée par l'écoulement d'air (LS) soit au moins partiellement maintenue dans le corps de base (13).

2. Dispositif (2) selon la revendication 1,
**caractérisé en ce que** l'élément de séparation (14) est conçu sous la forme d'une membrane élastique.

3. Dispositif (2) selon la revendication 1,
**caractérisé en ce que** l'élément de séparation (14) est conçu sous la forme d'une unité piston-cylindre.

4. Dispositif (2) selon la revendication 1,
**caractérisé en ce que** l'élément de séparation (14) est conçu sous la forme d'une plaque qui peut être écartée du corps de base (13) par pivotement.

5. Dispositif (2) selon l'une au moins des revendications 1 à 4,
**caractérisé en ce qu'**il est prévu plus d'un corps de base (13).

6. Tuyau d'aspirateur (11) comprenant au moins un dispositif (2) selon l'une au moins des revendications 1 à 5.
